# DEMANDE DE BREVET EUROPEEN

(11) **EP 1 674 739 A1**
(43) Date de publication de la demande: **28.06.2006**
(21) Numéro de dépôt: 05292570.8
(22) Date de dépôt: 05.12.2005
(51) Int. Cl.: F16B 21/16

(54) **Fusible mécanique tarable et réarmable à volonté**

(30) Priorité: 21.12.2004 FR 0413612
(71) Demandeur: Daouk, Antar, F-75016 Paris (FR)
(72) Inventeur: Daouk, Antar, F-75016 Paris (FR)

(57) **Abrégé**

Fusible mécanique tarable et réarmable à volonté pour dissocier deux ensembles selon une valeur de séparation prédéterminée, caractérisé en ce qu'il comporte deux éléments, dissociables par traction exercée sur l'un des éléments, désignés sous les termes de « logement à tarage réglable » (1) et « broche largable » (6).

Le logement (1) est doté d'éléments de pression pouvant être constitués de vis (2) à billes (3), de ressorts (4), de contre-écrous (5) ou encore d'éléments fonctionnant selon le principe de la force d'attraction magnétique, pouvant être des aimants (8) ou par accrochage ou par compression de fluide, de liquide ou d'air.

La broche largable (6) est dotée d'un ou plusieurs usinages (7) prévus pour recevoir les billes (3) à ressort (4) ou encore être constituée d'une matière ou d'éléments, pouvant être des aimants (8), en adéquation avec le système de retenue souhaité.

## Description

La présente invention concerne un fusible mécanique tarable et réarmable à volonté pour dissocier deux ensembles selon une valeur de séparation prédéterminée.

Les fusibles existants sont traditionnellement à rupture définitive et par conséquent à utilisation unique.

Ces fusibles présentent l'inconvénient de se dégrader dès lors ils sont exposés aux agressions climatiques ou environnementales et de ce fait risquent d'avoir une valeur de rupture différente de celle pour laquelle ils ont été programmés.

En outre, les systèmes à déclenchement pyrotechnique ou électrique nécessitent des niveaux de maintenance élevés.

Par ailleurs, ces systèmes sont généralement incompatibles avec une utilisation en immersion ou dans une zone présentant des risques de déflagration.

Le fusible mécanique tarable et réarmable à volonté, pouvant être métallique, permet de remédier à ces inconvénients.

Il se compose en effet, selon une première caractéristique, de deux éléments dissociables par traction exercée sur l'un des éléments :
- un logement à tarage réglable
- une broche largable

Le logement à tarage réglable s'arrime à un ensemble, la broche largable est reliée à un autre ensemble. Les deux ensembles se dissocient lors d'une traction exercée sur l'un des ensembles selon une valeur de séparation déterminée au cours du tarage.

Après dissociation des deux éléments, le fusible peut être réarmé par réintroduction de la broche dans le logement, cette opération nécessite une simple poussée de la main et le système peut être immédiatement remis en service.

Si besoin est, la valeur de séparation peut être changée par simple modification du tarage du système.

Le fusible du type susmentionné est étanche, il peut être utilisé en immersion ainsi qu'en zone présentant des risques de déflagration et il résiste aux agressions climatiques et environnementales grâce aux matériaux employés.

La conception du système est simple et ne nécessite pas de maintenance compliquée. Selon des modes particuliers de réalisation :
- le logement peut être doté d'éléments de pression pouvant être constitués de vis à billes, de ressorts ou encore d'éléments fonctionnant selon le principe de la force d'attraction magnétique pouvant être des aimants ou par accrochage ou par compression de fluide, de liquide ou d'air.
- la broche largable peut être dotée d'un ou plusieurs usinages prévus pour recevoir les billes à ressort ou encore être constituée de matières ou d'éléments, pouvant être des aimants, en adéquation avec le système de retenue souhaité.

Les dessins annexés illustrent un mode particulier de l'invention :
- la Figure 1 représente une vue d'ensemble du fusible mécanique réarmable et tarable à volonté.
- la Figure 2 représente en coupe le fusible doté d'un système d'aimants combiné avec un système de vis à billes à ressort.

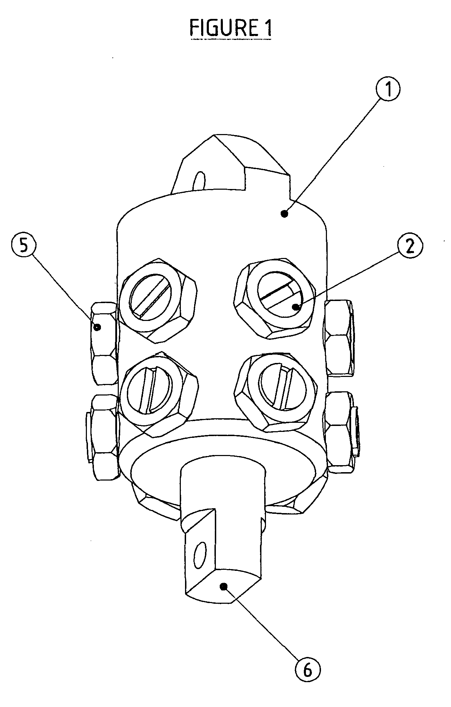

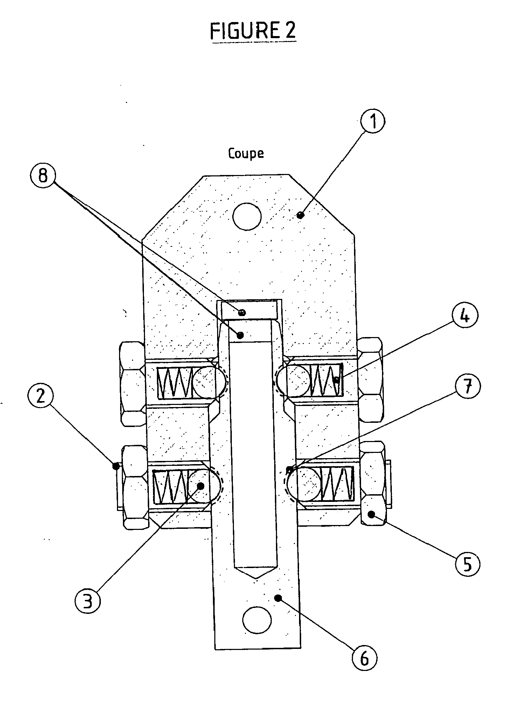

Selon la Figure 1, le fusible comporte :
- un logement à tarage réglable (1) doté de vis (2) et de contre-écrous (5)
- une broche largable (6)
   En référence à la Figure 2, le fusible comporte :

- un logement (1) dont le tarage est réglable, muni d'un système d'aimants (8) combiné avec une double rangée de vis (2) à billes (3) à ressort (4), de contre-écrous (5) et une broche largable (6) dotée d'usinage (7) et d'aimants (8).

Lors d'une traction exercée sur la broche largable, les billes à ressort se rétractent, les aimants se séparent et ainsi libèrent la broche.

Le fusible est réarmable à volonté par introduction de la broche largable (6) dans le logement (1), cette opération est réalisée par simple pression de la main et sa valeur de séparation peut être réglée selon la force de déclenchement voulue.

## Revendications

1. Fusible mécanique tarable et réarmable à volonté pour dissocier deux ensembles selon une valeur de séparation prédéterminée, **caractérisé en ce qu'**il comporte deux éléments, dissociables par traction exercée sur l'un des éléments, désignés sous les termes de « logement à tarage réglable » (1) et « broche largable » (6), le logement (1) est doté d'éléments de pression pouvant être constitués de vis (2) à billes (3), de ressorts (4), de contre-écrous (5) ou encore d'éléments fonctionnant selon le principe de la force d'attraction magnétique, pouvant être des aimants (8), ou par accrochage ou par compression de fluide, de liquide ou d'air, la broche largable (6) est dotée d'un ou plusieurs usinages (7) prévus pour recevoir les billes (3) à ressort (4) ou encore être constituée d'une matière ou d'éléments, pouvant être des aimants (8), en adéquation avec le système de retenue souhaité.

2. Fusible selon la revendication 1 **caractérisé en ce que** la valeur de séparation des deux ensembles est modifiable et réglable selon la force de déclenchement souhaité.

3. Fusible selon l'une quelconque des revendications 1 et 2 **caractérisé en ce qu'**il se remet immédiatement en service par une réintroduction de la broche dans le logement par un simple poussée de la main.

4. Fusible selon l'une quelconque des revendications de 1 à 3 **caractérisé en ce que** les matériaux qui le composent le rendent résistant aux agressions climatiques et environnementales.

5. Fusible selon l'une quelconque des revendications de 1 à 4 **caractérisé en ce qu'**il est étanche le rendent utilisable dans un milieu aquatique ou dans une zone présentant des risques de déflagration.
